# FASCICULE DE BREVET EUROPEEN

(11) **EP 0 637 362 B1**
(45) Date de publication et mention de la délivrance du brevet: **03.07.1996**
(21) Numéro de dépôt: 94902833.6
(22) Date de dépôt: 17.12.1993
(51) Int. Cl.: F16D 13/58, F16D 13/71

(54) **MECANISME D'EMBRAYAGE A DIAPHRAGME DU TYPE POUSSE, NOTAMMENT POUR VEHICULES AUTOMOBILES**
DURCH DRUCK BETÄTIGTER KUPPLUNGSMECHANISMUS MIT EINER TELLERFEDER INSBESONDRE FÜR KRFATFAHRZEUGE
CLUTCH MECHANISM WITH DIAPHRAGM OF THE PUSH TYPE, PARTICULARLY FOR MOTOR VEHICLES

(30) Priorité: 17.12.1992 FR 9215248
(43) Date de publication de la demande: 08.02.1995
(73) Titulaire: VALEO, 75848 Paris Cédex 17 (FR)
(72) Inventeur: THIRION DE BRIEL, Jacques, F-92700 Colombes (FR)
(74) Mandataire: Gamonal, Didier
(86) Numéro de dépôt international: FR9301267
(87) Numéro de publication internationale: WO9413971

(56) Documents cités:
- EP-A- 0 249 469
- FR-A- 2 459 921
- FR-A- 2 560 652
- US-A- 2 359 104

## Description

La présente invention concerne les embrayages à diaphragme du type poussé, notamment pour véhicules automobiles, ainsi que les mécanismes, à diaphragme équipant de tels embrayages.

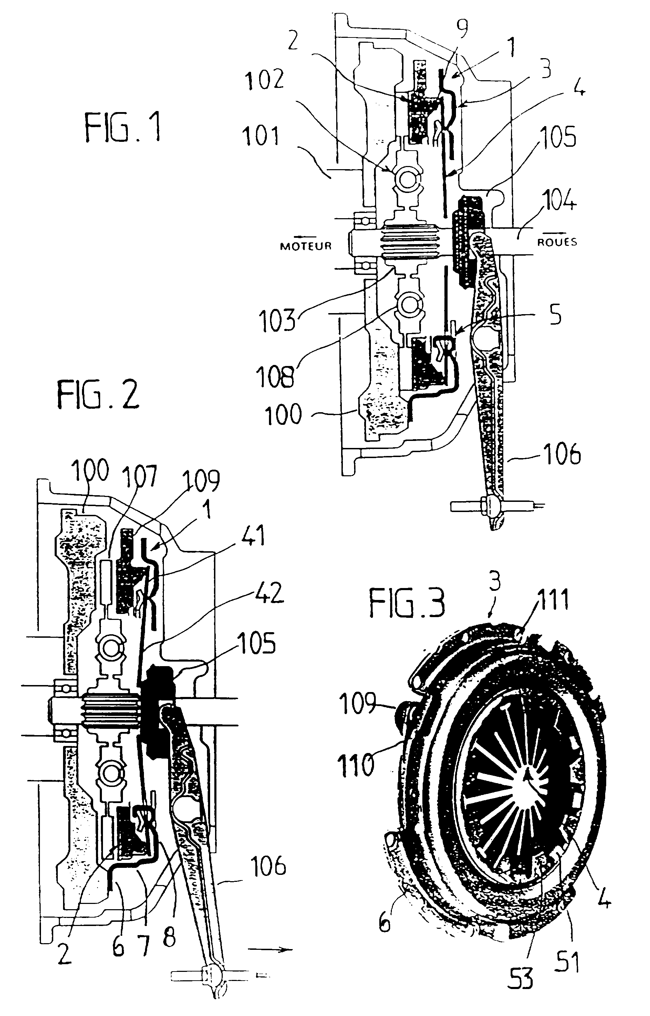

On rappellera (figures 1 à 3) qu'un embrayage comporte un plateau de réaction 100, un couvercle annulaire 3, propre à être fixé audit plateau de réaction 100, au moins un plateau de pression annulaire 2, lié en rotation au couvercle 20 en étant monté mobile axialement par rapport à celui-ci, un diaphragme annulaire 4 qui, prenant appui sur le couvercle 3, agit axialement sur le plateau de pression 2 dans un sens pour lequel ledit plateau s'écarte du couvercle pour contact avec les garnitures de frottement 107 d'un disque de friction 102.

Le plateau de réaction 100 est propre à être fixé, notamment par des vis, au vilebrequin du moteur à combustion interne, et porte usuellement une couronne de démarreur, tandis que le disque de friction 102 présente un moyeu 103 calé en rotation, ici par des cannelures, avec l'arbre d'entrée 104 de la boîte de vitesses.

Un seul disque de friction et un seul plateau de pression sont ici prévus, mais en variante plusieurs plateaux 2 et disques 102 peuvent être prévus.

Les garnitures de frottement 107 sont classiquement solidaires d'un support et sont propres à être serrées, en position embrayage engagé (figure 1), entre les plateaux 100,2. Le disque 102 comporte ici un dispositif amortisseur de torsion. Plus précisément, les garnitures 107 s'étendent axialement de part et d'autre du support lié par des colonnettes à des rondelles de guidage, lesdites colonnettes fixant entre elles les rondelles de guidage.

Ces rondelles s'étendent axialement de part et d'autre d'un voile de moyeu, avec intervention de ressorts 108 logés pour partie dans des fenêtres pratiquées en vis-à-vis dans lesdites rondelles de guidage et voile. Ce voile est solidaire en rotation, éventuellement à jeu, au moyeu 103.

Bien entendu, le support peut être directement fixé au moyeu 103, et le disque 102 être rigide.

Le diaphragme 4 présente une partie périphérique 41 élastique formant rondelle Belleville et une partie centrale fragmentée en doigts radiaux 42 séparés deux à deux par des fentes. L'embrayage étant du type poussé, ladite partie périphérique 41 est ici montée intérieurement de manière basculante sur le couvercle à l'aide de moyens d'assemblage 5 assujettissant de manière basculante le diaphragme 4 au couvercle 3 en étant portés par celui-ci, et radialement plus à l'extérieur sur un appui annulaire 9 porté par le plateau de pression 2 et formé ici à la faveur d'un bossage saillant fractionné en secteurs annulaires de celui-ci.

Les doigts 42 sont propres à être manoeuvrés en poussée par un organe de débrayage 105. A la figure 1, il s'agit d'une butée de débrayage 105 comportant un élément de manoeuvre propre à être soumis à l'action d'un organe de commande, tel qu'une fourchette de débrayage 106, et un élément d'attaque propre à agir sur le diaphragme, ledit élément d'attaque comportant un roulement à billes dont une de ses bagues est conformée pour agir en poussée sur l'extrémité des doigts du diaphragme 4, sur la face de celui-ci tournée vers le couvercle 3.

Pour débrayer (figure 2), il faut donc agir en poussée sur les doigts 42 à l'aide de la butée 105, pour faire basculer le diaphragme, désengager l'embrayage et desserrer les garnitures 107.

Le couvercle 3, le plateau de pression 2 et le diaphragme 4 forment un mécanisme d'embrayage 1, ici unitaire, ledit plateau de pression étant lié en rotation au couvercle 3 en étant monté sur celui-ci avec mobilité axiale par l'intermédiaire de languettes tangentielles 110 (figure 3) fixées, de manière connue en soi, par des rivets à l'une de leur extrémité au couvercle 3 et à leur autre de leur extrémité à des pattes 109 du plateau de pression.

En variante, la liaison plateau 2 - couvercle 3 avec mobilité axiale peut être du type tenons-mortaises.

Comme décrit par exemple dans les documents FR-A-2 585 424 et FR-A-2 456 877, les moyens d'assemblage 5 comportent des organes de retenue (51 dans la figure 3) attelés au couvercle et traversant le diaphragme à la faveur d'orifices pratiqués dans celui-ci, ainsi que deux appuis annulaires respectivement primaire et secondaire disposés en regard l'un de l'autre. L'appui primaire est porté par le couvercle, tandis que l'appui secondaire est porté par les organes de retenue.

En position embrayage engagé, le diaphragme 4 est en appui sur l'appui primaire, tandis qu'en position embrayage désengagé le diaphragme sollicite l'appui secondaire.

Dans ces documents, les moyens d'assemblage 5 appliquent axialement le diaphragme 4 avec une charge de serrage contre l'appui primaire en position embrayage engagé.

Dans certains cas, il se pose un problème car ce serrage, en raison des frottements, augmente l'effet de frottement du diaphragme créant des phénomènes d'hystérésis lors de son basculement entre les appuis primaire et secondaire et entraîne au fur et à mesure de l'usure inévitable en service du diaphragme et des appuis de grandes variations de charges.

Pour pallier ces inconvénients, on a prévu dans le susmentionné document FR-A-2 585 424 de réaliser l'appui secondaire à la faveur d'une couronne jonc de forme tronconique.

Dans le document FR-A-2 456 877, on a prévu une disposition dans laquelle le diaphragme s'écarte temporairement élastiquement de ses appuis primaire et secondaire lors de son basculement.

Tout ceci donne satisfaction, mais il peut être souhaitable dans certaines applications de diminuer encore cette hystérésis. De même il peut être souhaitable que l'appui secondaire cède élastiquement lors de l'opération de débrayage (passage de la position embrayage engagé à la position embrayage désengagé) pour un bon confort de l'usager et permettre lors du réembrayage un serrage progressif des garnitures de frottement 107.

Pour résoudre ce problème on peut songer à faire appel à des dispositions du type de celles décrites dans le document FR-A-2 466 877 (notamment figures 13 et 14).

Ces solutions compliquent la fabrication de l'embrayage et en outre le serrage élastique n'est pas aussi précis que souhaité, la charge d'une rondelle Belleville ou d'un jonc ondulé n'étant pas aisée à maîtriser.

Cette maîtrise du serrage est très importante notamment en ce qui concerne la levée du plateau de pression et la course de débrayage, pour une bonne libération des garnitures de frottement du disque de friction.

La présente invention a pour objet de pallier ces inconvénients, et donc de créer de nouveaux moyens d'assemblage à appui secondaire élastique dotés d'une faible hystérésis contrôlable, tout en modifiant le moins possible la fabrication de l'embrayage et en augmentant le moins possible la course de débrayage.

Suivant l'invention, un mécanisme d'embrayage du type sus-indiqué est caractérisé en ce que son appui secondaire est formé à la faveur d'un anneau en matière élastique réticulable et adhérente après son dépôt.

Grâce à la réticulation de la matière élastique, celle-ci durcit après son dépôt, en sorte que ledit appui ne présente que de faibles variations d'épaisseur lorsque l'embrayage passe de sa position engagée à sa position désengagée. Il en résulte que la course de débrayage n'est pas augmentée outre mesure et que la levée du plateau de pression est satisfaisante. En outre, on obtient un bon basculement du diaphragme avec de faibles valeurs d'hystérésis du fait notamment que le contact, entre le diaphragme et son appui secondaire, n'est pas métallique. De plus, lors du réembrayage on bénéficie d'une certaine progressivité utile pour le confort de l'usager. L'anneau ou cordon permet de diminuer les bruits lors du basculement du diaphragme, en outre les tolérances de fabrication des pièces sont moins précises.

On appréciera que la fabrication de l'embrayage est aisée, puisqu'il suffit de déposer un cordon, par exemple à l'aide d'une buse, soit sur le diaphragme ou sur une pièce d'appui, pour former l'appui secondaire qui après ce dépôt réticulera et se fixera sur la pièce concernée, par adhérence par exemple par collage.

La disposition selon l'invention ouvre un vaste champ d'application et il est possible par exemple de fixer l'appui secondaire sur le diaphragme, ainsi que l'appui primaire qui peut être réalisé à l'image de l'appui secondaire. Dans tous les cas, le montage est facilité, puisque l'appui secondaire forme un tout manipulable et transportable, soit avec le diaphragme, soit avec sa pièce de support associée ou les deux.

Avantageusement l'appui secondaire est de forme oblongue, en sorte qu'il est formée une charnière élastique pour le diaphragme. En outre, la déformation axiale de l'appui secondaire est minimisée. La perte de levée du plateau de débrayage est ainsi minimisée. De plus les tolérances de fabrication sont moins rigoureuses. En effet, on est sur que l'appui secondaire se trouvera en regard de l'appui primaire pour un bon basculement du diaphragme.

La description qui va suivre illustre l'invention en référence aux dessins annexés dans lesquels :
- la figure 1 est une vue en coupe axiale d'un embrayage du type poussé de l'art antérieur pour la position embrayage engagé ;
- la figure 2 est une vue analogue à la figure 1, pour la position embrayage désengagé ;
- la figure 3 est une vue en perspective du mécanisme d'embrayage selon les figures 1 et 2 ;
- les figures 4 à 8 sont des vues partielles en coupe axiale d'un mécanisme d'embrayage équipé de l'appui secondaire selon l'invention pour diverses variantes de réalisation.

Dans les figures représentées, l'embrayage est un embrayage du type poussé à diaphragme pour véhicule automobile comme décrit ci-dessus.

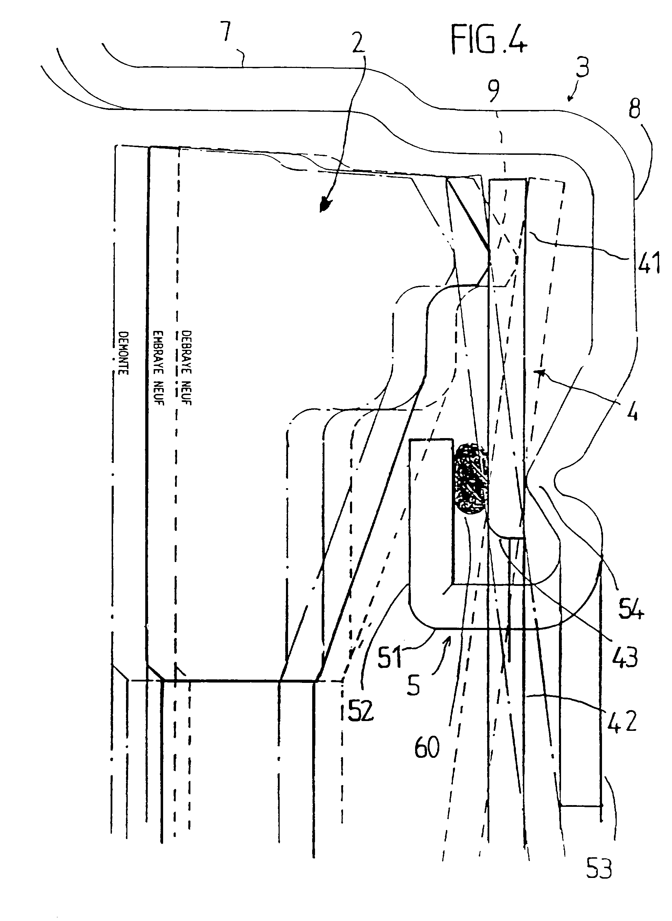

Dans ces figures le couvercle 3, ici monobloc, a globalement la forme d'une assiette creuse avec un rebord radial de fixation 6 s'étendant radialement en direction opposée à l'axe de l'ensemble en étant doté de trous 111 (figure 3) pour le passage d'organes de fixation (ici des vis non représentées). Ledit rebord 6 se raccorde à une jupe d'orientation axiale 7 entourant tant le plateau 2, que les garnitures 107 ladite jupe 7 se raccordant à un fond 8 centralement troué et portant un appui annulaire 54 (figure 4) pour le diaphragme 4.

Le couvercle 3, le plateau de pression 2 et le diaphragme 4 du mécanisme unitaire d'embrayage sont des pièces annulaires et il en est de même du plateau de réaction 100, du disque 102 et de ses garnitures 107.

Suivant l'invention, un mécanisme d'embrayage du type sus-indiqué est caractérisé en ce que son appui secondaire 60 est formé à la faveur d'un anneau en matière réticulable et adhérente après son dépôt.

Plus précisément, à la figure 4, les moyens d'assemblage 5, assujettissant de manière pivotante le diaphragme 4 au couvercle 3, comportent des pattes de retenue, relativement minces et plates, attelées au couvercle 3 en ayant une partie axiale 51 traversant le diaphragme à la faveur des orifices 43 ménagés entre ses doigts radiaux 42 à la racine desdits doigts, et une aile d'extrémité 52, pliée radialement vers l'extérieur, que présente ladite partie axiale 51, après traversée de l'orifice 43, à son extrémité, avec formation d'un coude de calage entre l'aile 52 et la partie axiale 51. Ici les pattes sont issues directement du couvercle. Pour plus de précisions on se reportera au document FR-A-2 585 424. L'appui primaire 54 est formé par un embouti annulaire pratiqué dans le fond 8 du couvercle, lesdites pattes des moyens d'assemblage 5 se raccordant audit appui primaire 54 par un arrondi. L'appui primaire 54 est disposé radialement au-dessus desdites pattes 51,52 en étant en contact avec la partie interne de la rondelle Belleville 41 du diaphragme de forme tronconique à l'état libre.

On voit en 60 l'appui secondaire selon l'invention, cet appui secondaire annulaire a une forme oblongue avec deux côtés parallèles reliés entre eux par deux demi-cercles à chacune de leur extrémité. L'appui forme un cordon.

Alors que l'appui primaire 54 est ponctuel, l'appui secondaire 60 est donc d'étendue supérieure. Ici l'appui 60 est réalisé à l'aide d'un cordon en matière élastique réticulable et adhérente que l'on dépose à l'aide d'une buse sur le diaphragme, il est ici sous forme de pâte de silicone, résistante à la chaleur, de la société RHONE-POULENC vendue sous la marque "Rhodorseal".

Ainsi à l'aide de la buse, on peut garantir l'épaisseur de ce cordon, qui adhérisera ici au diaphragme par collage. Le procédé d'assemblage est alors aisé, puisqu'il suffit d'enfiler le diaphragme 4 avec l'appui secondaire 60 collé sur les pattes 51,52 des moyens d'assemblage 5 non encore pliées, puis de plier radialement l'extrémité des pattes.

On appréciera que la conformation de cet appui secondaire 60, d'orientation radiale, et de plus grande étendue que l'appui primaire 54, permet à coup sur que l'appui primaire 54 soit en face de l'appui secondaire 60, ce qui est favorable à un bon basculement du diaphragme.

En outre, le pliage des pattes 51,52, pour formation de l'aile 52, est aisé, aucune rondelle Belleville n'étant à comprimer. De plus la distance, entre le diaphragme et cette aile 52, est maîtrisable aisément.

Après réticulation de la matière de l'appui 60, celui-ci est durcit, en sorte qu'il se déforme faiblement lors de l'opération de débrayage.

Sur cette figure 4, les diverses positions du diaphragme et du plateau de pression 2 ont été représentées. L'expression "embrayage neuf" représentant la position du plateau de pression 2 et du diaphragme (sensiblement vertical) lorsque les garnitures de frottement 107 sont "neuves", la position débrayée "neuve" représentant la position desdites pièces 2 et 4 lorsque l'embrayage est désengagé, ses garnitures 107 étant neuves. L'expression "démontée" représente la position des diverses pièces du mécanisme lorsque le mécanisme 1 n'est pas encore fixé sur le plateau de réaction 100, le diaphragme s'appuyant alors sur des pattes radiales de retenue 53, que présente le fond 8 du couvercle, lesdites pattes 53 alternant circonférentiellement avec des pattes 51,52 des moyens d'assemblage 5 comme visible notamment à la figure 3.

En position embrayage engagé, le diaphragme 4, formant moyens élastiques à action axiale, s'appuie sur l'appui primaire 54, son appui secondaire étant alors délesté. Dans cette position, l'appui secondaire 60 applique axialement le diaphragme 4 avec une charge de serrage contre l'appui primaire 54.

Lors de l'opération de débrayage l'appui primaire est délesté tandis que l'appui secondaire 60 est sollicité, celui-ci s'écrasant lors de la fin de l'opération de débrayage.

On appréciera que cet appui élastique permet un rattrapage des jeux et une réduction des bruits.

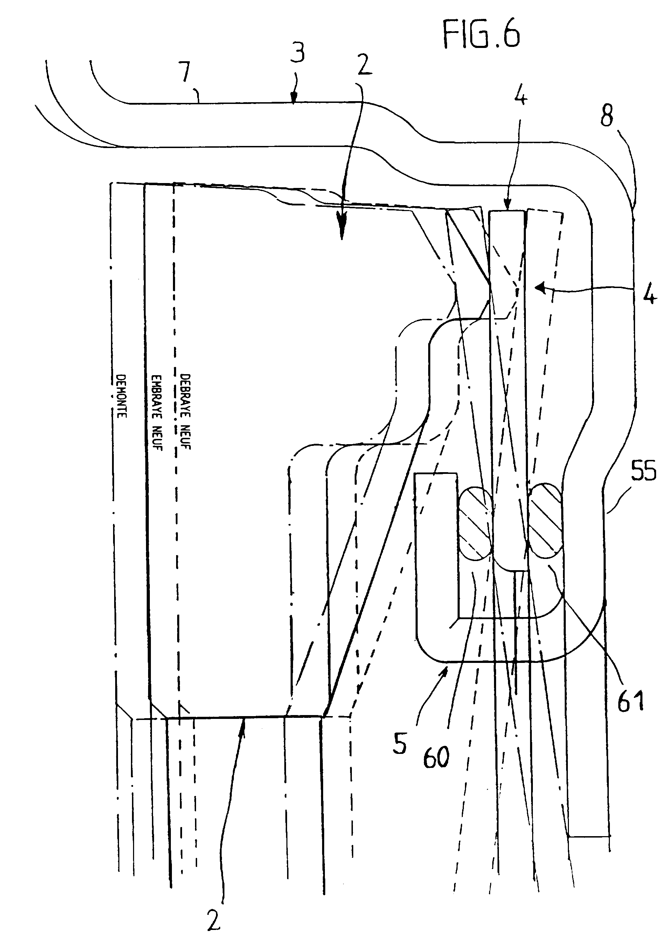

Bien entendu, l'appui primaire peut être à l'image de l'appui secondaire, ainsi à la figure 6 l'appui primaire 61 est formé à la faveur d'un anneau en matière réticulable et adhérente après son dépôt.

Dans cette figure les deux appuis sont collés sur le diaphragme 4 à la périphérie interne de sa rondelle Belleville 41 de part et d'autre de celle-ci, et le couvercle 8 est simplifié puisqu'il ne présente plus d'emboutis, celui-ci étant remplacé par une partie plane 55 décalée axialement vers le plateau de pression par rapport à la périphérie externe du fond 8.

On appréciera que l'appui primaire 61 permet de filtrer les vibrations qui se produisent notamment en raison du mouvement axial du vilebrequin, lorsque l'embrayage est engagé au point mort.

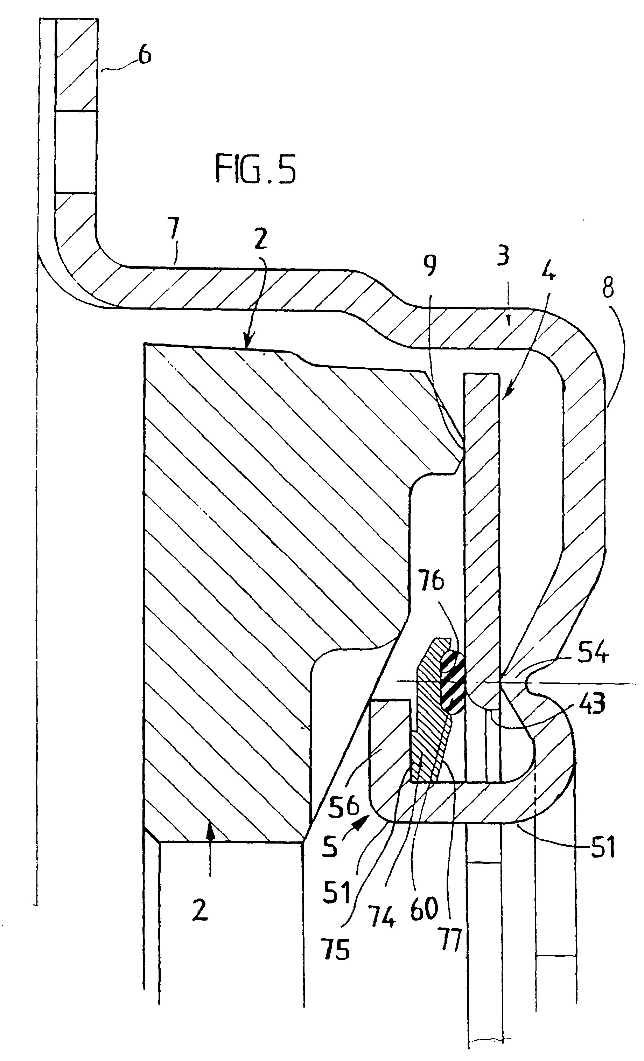

Alors que dans la figure 4 le contact entre l'appui secondaire et les pattes d'assemblage était discontinu, à la figure 5, on peut rendre continu cet appui à l'aide d'une couronne de support 74. Cette couronne de support présente à sa périphérie externe un logement 76 épousant la forme de l'appui secondaire 60 et à sa périphérie interne d'un talon 75 pour contact avec l'extrémité radiale 56 des pattes d'assemblage 51, à la base de ladite extrémité. Ce logement 76 évite un pelage de l'appui secondaire 60 qui, comme à la figure 4, est au contact de la rondelle Belleville 41 par l'un de ses côtés plats de sa forme oblongue.

Cette couronne est centrée à sa périphérie interne par la partie axiale 51 des pattes, elle présente sur sa face tournée vers le diaphragme une obliquité 77 permettant un bon basculement du diaphragme 4.

Dans cette figure, le cordon 60 est déposé à l'aide d'une buse dans le logement 76 formant un moule, l'appui secondaire 60 étant alors solidaire de la couronne 74. On notera la forme enveloppante du logement 76 en sorte que la déformation axiale de l'appui secondaire est minimisée.

On appréciera que cette disposition permet de ne pas modifier les outillages. Bien entendu il est possible de modifier légèrement les outillages pour notamment rallonger les pattes d'assemblage.

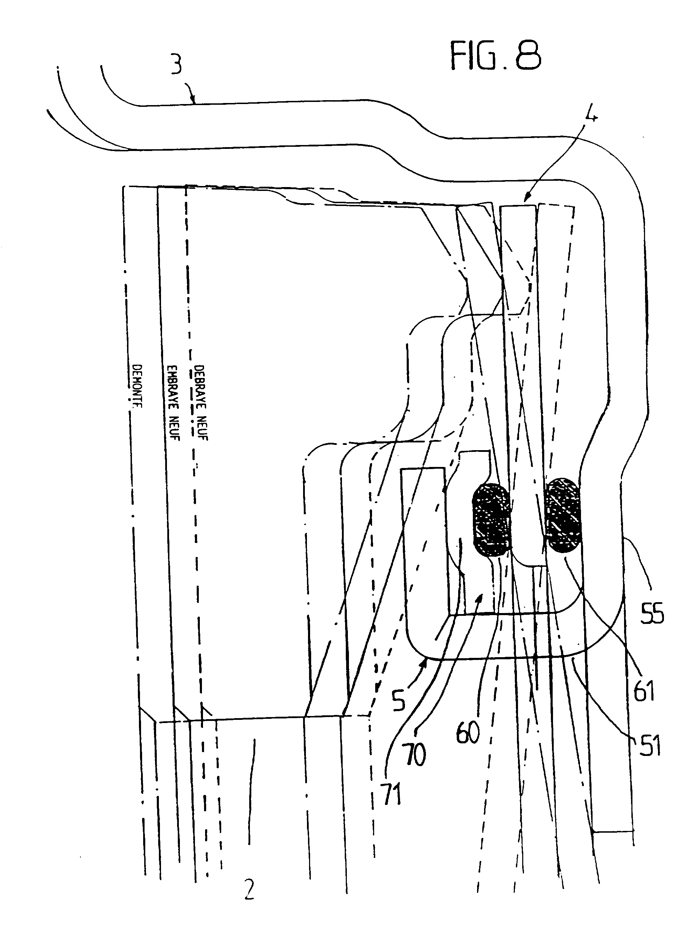

Comme visible alors à la figure 8, l'appui secondaire 60 est toujours solidaire de sa couronne de support 70 centrée à sa périphérie interne sur les pattes axiales 51, mais ici c'est le logement 71 de l'appui secondaire 60 qui est en contact direct avec l'extrémité radiale 56 des pattes d'assemblage. Cette couronne 70 est donc moins massive que la précédente, sans obliquité et peut être réalisée par emboutissage.

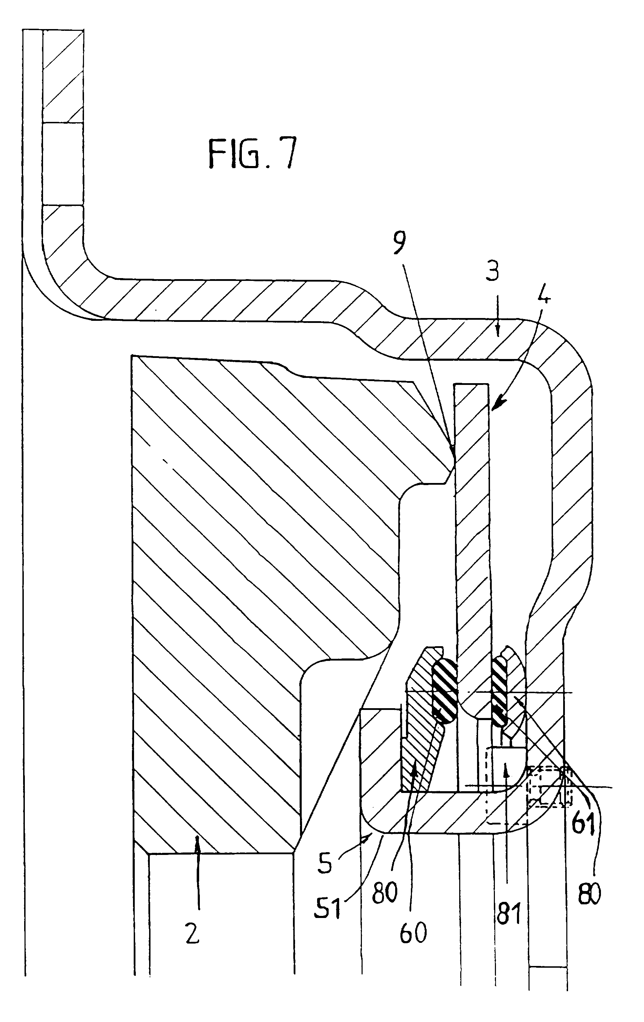

Bien entendu, l'appui primaire (figure 7) peut être formé à l'aide d'un cordon en matière élastique 61 déposé dans un logement formé dans une pièce 80, de forme bombée au contact basculant avec le fond du couvercle 8.

L'appui secondaire 80 étant identique à celui de la figure 5. Dans ce cas, le cordon 61 peut être fixé au diaphragme 4, il peut en être de même du cordon 60.

Ainsi qu'on l'aura compris, l'invention ouvre la voie à un grand nombre de combinaison et ne se limite pas aux exemples représentés.

En particulier, les organes de retenue peuvent consister en des agrafes comme visibles à la figure 7 du document FR-A- 2 466 877. Ces pattes peuvent avoir également la configuration de celle de la figure 10 du susmentionné document, dans ce cas il est nécessaire d'avoir une couronne pour porter l'appui secondaire.

Il est également possible de fractionner l'appui secondaire et/ou l'appui primaire. En résumé, les moyens d'assemblage 5 comportent, d'une part, des organes de retenue attelés au couvercle, par exemple par agrafage ou par rivetage ou en étant d'un seul tenant avec ledit couvercle, et d'autre part, des appuis annulaires primaire et secondaire disposés de part et d'autre du diaphragme, l'appui primaire étant adjacent au couvercle 3 et l'appui secondaire le plus éloigné de celui-ci.

Grâce à l'invention, l'appui secondaire peut être porté par le diaphragme (figure 4 par exemple) ou par les organes de retenue (figure 5 par exemple) ou les deux à la fois (figure 5 par exemple), grâce à l'adhérence de l'appui secondaire avec formation d'une charnière élastique.

L'appui primaire peut être porté le couvercle et/ou le diaphragme.

## Revendications

1. Mécanisme d'embrayage notamment pour véhicules automobiles, du genre comportant un couvercle annulaire (3) propre à être fixé à un plateau de réaction (100), au moins un plateau de pression annulaire (2), lié en rotation au couvercle (3) en étant monté mobile axialement par rapport à celui-ci, un diaphragme annulaire (4) qui, prenant appui sur le couvercle (3), agit axialement sur le plateau de pression (2) dans un sens pour lequel ledit plateau (2) s'écarte du couvercle (3) pour contact avec les garnitures de frottement (107) d'un disque de friction (102), dans lequel le diaphragme (4) présente une partie périphérique formant rondelle Belleville (41) et une partie centrale fragmentée en doigts radiaux (42), ladite partie périphérique (41) étant montée de manière basculante sur le couvercle (3) à l'aide de moyens d'assemblage (5) assujettissant de manière basculante le diaphragme (4) au couvercle (3) et comportant des organes de retenue (51) attelés au couvercle (3) et des appuis annulaires primaire (54,61) et secondaire (60) disposés de part et d'autre du diaphragme (4) avec l'appui primaire adjacent au couvercle (3), tandis que les doigts radiaux (42) sont propres à être manoeuvrés en poussée par un organe de débrayage (105), caractérisé en ce que l'appui secondaire (60) est formé à la faveur d'un anneau en matière élastique réticulable et adhérente après son dépôt.

2. Mécanisme selon la revendication 1, caractérisé en ce que l'appui secondaire (60) a une forme oblongue.

3. Mécanisme selon la revendication 2, caractérisé en ce que l'appui secondaire (60) est adhérisé au diaphragme (4).

4. Mécanisme selon la revendication 1, caractérisé en ce que l'appui secondaire (60) est adhérisé à une couronne de support (70,74).

5. Mécanisme selon la revendication 4, caractérisé en ce que la couronne de support (70,74) présente un logement (71,76) formant un moule pour l'appui secondaire (60).

6. Mécanisme selon la revendication 5, dans lequel les organes de retenue consistent en des pattes de retenue, relativement minces et plates ici du couvercle en ayant une partie axiale (51) traversant le diaphragme (4), caractérisé en ce que ladite couronne de support (70,74) est centrée à sa périphérie interne sur les pattes axiales (51).

7. Mécanisme selon la revendication 1, caractérisé en ce que l'appui primaire (61) est à l'image de l'appui secondaire (60).

## Patentansprüche

1. Kupplungsmechanismus, insbesondere für Kraftfahrzeuge, der Bauart mit einem ringförmigen Deckel (3), der dazu geeignet ist an eine Reaktionsscheibe (100) befestigt zu werden, mit wenigstens einer ringförmigen Druckscheibe (2), die drehfest mit dem Deckel (3) verbunden ist, wobei sie zu diesem axial beweglich montiert ist, mit einer ringförmigen Tellerfeder (4), die indem sie gegen den Deckel (3) zu liegen kommt, axial auf die Druckscheibe (2) in eine Richtung wirkt, in die sich die Scheibe (2) vom Deckel (3) entfernt, um in Kontakt mit den Reibbelägen (107) einer Reibscheibe (102) zu kommen, in der die Tellerfeder (4) einen in Umfangsrichtung liegenden Bereich, der einen Belleville-Ring (41) bildet und einen mittigen Bereich, der in radiale Hebel (42) aufgeteilt ist, aufweist, wobei der in Umfangsrichtung liegende Bereich (41) schwenkbar auf dem Deckel (3) mit Hilfe von Montagemitteln (5) montiert ist, die die Tellerfeder (4) schwenkbar an den Deckel (3) befestigen und die an den Deckel (3) befestigte Halteelemente (51) und erste ringförmige Anlageelemente (54, 61) sowie zweite ringförmige Anlageelemente (60) umfassen, die zu beiden Seiten der Tellerfeder (4) vorgesehen sind, wobei sich das erste Anlagelement benachbart zum Deckel (3) befindet, während die radialen Ausrückhebel (42) dazu dienen, durch Druck von einem Ausrückelement (105) betätigt zu werden, **dadurch gekennzeichnet**, daß das zweite Anlageelement (60) aus einem Ring aus elastischem Material geformt ist, das vernetzbar und haftend nach seiner Auflage ist.

2. Mechanismus nach Anspruch 1, **dadurch gekennzeichnet,** daß das zweite Anlageelement (60) eine längliche Form aufweist.

3. Mechanismus nach Anspruch 2, **dadurch gekennzeichnet**, daß das zweite Anlageelement (60) an der Tellerfeder (4) befestigt ist.

4. Mechanismus nach Anspruch 1, **dadurch gekennzeichnet**, daß das zweite Anlageelement (60) an einen Haltekranz (70, 74) befestigt ist.

5. Mechanismus nach Anspruch 4, **dadurch gekennzeichnet**, daß der Haltekranz (70, 74) ein Lager (71, 76) aufweist, das eine Ausnehmung für das zweite Anlageelement (60) bildet.

6. Mechanismus nach Anspruch 5, in dem die Halteelemente Haltelaschen, hier des Deckels, umfassen, die relativ schmal und platt sind, wobei sie einen axialen Bereich (51) der durch die Tellerfeder 4) führt, aufweisen, **dadurch gekennzeichnet**, daß der Haltekranz (70, 74) an seinem inneren Umfang auf die axialen Laschen (51) zentriert ist.

7. Mechanismus nach Anspruch 1, **dadurch gekennzeichnet,** daß das erste Anlageelement (61) ein Abbild des zweiten Anlageelementes (60) ist.

## Claims

1. A clutch mechanism in particular for motor vehicles, of the type comprising an annular cover (3) suitable for being fixed to a reaction plate (100), at least one annular pressure plate (2), rotationally connected to the cover (3) by being mounted axially movably in relation thereto, an annular diaphragm (4), which, bearing on the cover (3), acts axially on the pressure plate (2) in a direction for which the said plate (2) moves away from the cover (3) for contact with the friction linings (107) of a driven plate assembly (102), in which the diaphragm (4) has a peripheral part forming a Belleville washer (41) and a central part divided into radial levers (42), the said peripheral part (41) being rockingly mounted on the cover (3) by means of mounting means (5) rockingly fixing the diaphragm (4) to the cover (3) and comprising retention elements (51) connected to the cover (3) and primary (54, 61) and secondary (60) annular bearing means disposed on either side of the diaphragm (4) with the primary bearing means adjacent to the cover (3), whereas the radial levers (42) are suitable for being operated by thrust by a clutch throwout device (105),
**characterised in that** the secondary bearing means (60) is formed by means of a ring made of elastic material which is cross-linkable and adherent after its deposition.

2. A mechanism according to Claim 1,
**characterised in that** the secondary bearing means (60) has an oblong shape.

3. A mechanism according to Claim 2,
**characterised in that** the secondary bearing means (60) is stuck to the diaphragm (4).

4. A mechanism according to Claim 1,
**characterised in that** the secondary bearing means (60) is stuck to a support ring (70, 74).

5. A mechanism according to Claim 4,
**characterised in that** the support ring (70, 74) has a seat (71, 76) forming a mould for the secondary bearing means (60).

6. A mechanism according to Claim 5, in which the retention elements consist of relatively thin and flat retention lugs here of the cover by having an axial part (51) passing through the diaphragm (4),
**characterised in that** the said support ring (70, 74) is centred at its inner periphery on the axial lugs (51).

7. A mechanism according to Claim 1,
**characterised in that** the primary bearing means (61) is in the image of the secondary bearing means (60).
